# EUROPÄISCHE PATENTSCHRIFT

(11) **EP 1 253 037 B1**
(45) Veröffentlichungstag und Bekanntmachung des Hinweises auf die Patenterteilung: **30.06.2004**
(21) Anmeldenummer: 01110447.8
(22) Anmeldetag: 27.04.2001
(51) Int. Cl.: B60K 6/04, B60L 11/02

(54) **Motor-Generator-System für ein Kraftfahrzeug mit Hybrid-Traktionsantrieb**
Motor-generator-system for a motor vehicle with hybrid traction drive
Sytème-moteur-générateur pour un vehicule à moteur avec entraînement de traction hybride

(43) Veröffentlichungstag der Anmeldung: 30.10.2002
(73) Patentinhaber: SIEMENS AKTIENGESELLSCHAFT, 80333 München (DE)
(72) Erfinder: Dietz, Armin, 97276 Margetshoechheim (DE); Gao, Hailong, 97299 Zell (DE); Vickermann, Martin, 97535 Wuelfershausen (DE)

(56) Entgegenhaltungen:
- DE-A- 4 444 545
- PATENT ABSTRACTS OF JAPAN vol. 1995, no. 11, 26. Dezember 1995 (1995-12-26) -& JP 07 231502 A (TOYOTA MOTOR CORP), 29. August 1995 (1995-08-29)

## Beschreibung

Die Erfindung bezieht sich auf ein Kraftfahrzeug mit Hybrid-Traktionsantrieb gemäß Patentanspruch 1.

Hybrid-Traktionsantriebe, von denen in vorliegender Erfindung ausgegangen wird, sind in ihrem grundsätzlichen Aufbau z.B. durch die DE 44 44 545 A1 derart bekannt, dass im Traktionsbetrieb ein Verbrennungsmotor und/oder eine aus einer Batterie speisbare elektrische Maschine allein oder gemeinsam das Fahrzeug antreibt und dass im Bremsbetrieb oder dergleichen die elektrische Maschine als Generator Energie rückgewinnt und in die Batterie speist; im vorgenannten bekannten Fall ist darüber hinaus zur Vergrößerung einer durch den Traktionsantrieb der elektrischen Maschine erzielbaren Reichweite ein zusätzlicher, von dem Verbrennungsmotor antreibbarer Generator zum Aufladen der Batterie vorgesehen.

Gemäß Aufgabe vorliegender Erfindung soll das für ein Motor-Generator-System in seinem Grundaufbau aufzubringende Investment durch erweiterte Einsatzmöglichkeit eines damit ausgerüsteten Fahrzeuges besser ausgenutzt werden können.

Die Lösung dieser Aufgabe gelingt erfindungsgemäß durch ein Kraftfahrzeug gemäß Patentanspruch 1; vorteilhafte Ausgestaltungen sind jeweils Gegenstand der Unteransprüche.

Das erfindungsgemäße Kraftfahrzeug erlaubt unter Mitbenutzung der für einen Traktionsantrieb bereits installierten Grundausstattung durch lediglich eine weitere, gegebenenfalls von der ersten Statorwicklung abgetrennte, in der vorhandenen elektrischen Maschine vorgesehene Statorwicklung den Einsatz des erfindungsgemäßen Kraftfahrzeuges als sogenanntes Handwerker-Fahrzeug zur Versorgung stationärer Netzverbraucher, z.B. von Werkzeugen wie Bohrmaschinen, elektrische Sägen oder Pumpen, auf Baustellen oder ähnlichen "Inseln", auf denen kein oder noch kein allgemeiner Haushalts-Netzanschluss zur Verfügung steht.

Die gegenüber der ersten Statorwicklung elektrisch isolierte, jedoch im gleichen Blechpaket, vorzugsweise in gemeinsamen Nuten, untergebrachte zusätzlich Statorwicklung kann im Traktionsbetrieb in vorteilhafter Weise als zusätzlicher elektrischer Booster oder im Generatorbetrieb zu erhöhter Nachladung der Batterie hinzugezogen werden; die elektrische Maschine ist insbesondere bei den für derartige Zwecke erforderlichen mittleren Leistungen als Asynchronmaschine mit Kurzschlussläufer ausgebildet.

In vorteilhafter Weise ist zur Spannungs- und Erreger-Blindleistungsregelung der zweiten Statorwicklung die an sich bereits vorhandene Umrichter-Vorrichtung mitbenutzt und dazu über die entsprechende Anordnung der zweiten Statorwicklung im gleichen, die erste Statorwicklung aufnehmenden Blechpaket transformatorisch an die erste Statorwicklung und deren Steuerungsvorrichtungen angekoppelt. Obwohl die Umrichter-Vorrichtung eine pulsweitenmodulierte Spannung mit einem nur näherungsweise sinusförmigen Verlauf liefert, ist durch die transformatorische Ankopplung der zweiten Statorwicklung an die erste Statorwicklung in vorteilhafter Weise eine Filterwirkung derart erreichbar, dass der Oberwellenanteil der Ausgangsspannung reduzierbar und dadurch deren Kurvenform einem erstrebten Sinusverlauf besser annäherbar ist.

Die Erfindung sowie weitere vorteilhafte Ausgestaltungen der Erfindung gemäß Merkmalen der Unteransprüche sind im folgenden anhand schematisch dargestellter Ausführungsbeispiele in der Zeichnung näher erläutert; darin zeigen:
- FIG 1: im Blockschaltbild das Motor-Generator-System im Generator-Inselbetrieb;
- FIG 2: im Blockschaltbild das Motor-Generatorsystem im Traktionsbetrieb;
- FIG 3: die erste und die zweite Statorwicklung jeweils als Sternschaltung im Generator-Inselbetrieb;
- FIG 4: die erste und die zweite Statorwicklung jeweils als Dreiecksschaltung im Traktionsbetrieb;
- FIG 5: die erste und die zweite Statorwicklung jeweils als polumschaltbare Sternschaltung bei niedriger Polzahl im Generator-Inselbetrieb;
- FIG 6: die erste und die zweite Statorwicklung jeweils als polumschaltbare Doppelsternschaltung bei hoher Polzahl im Traktionsbetrieb.

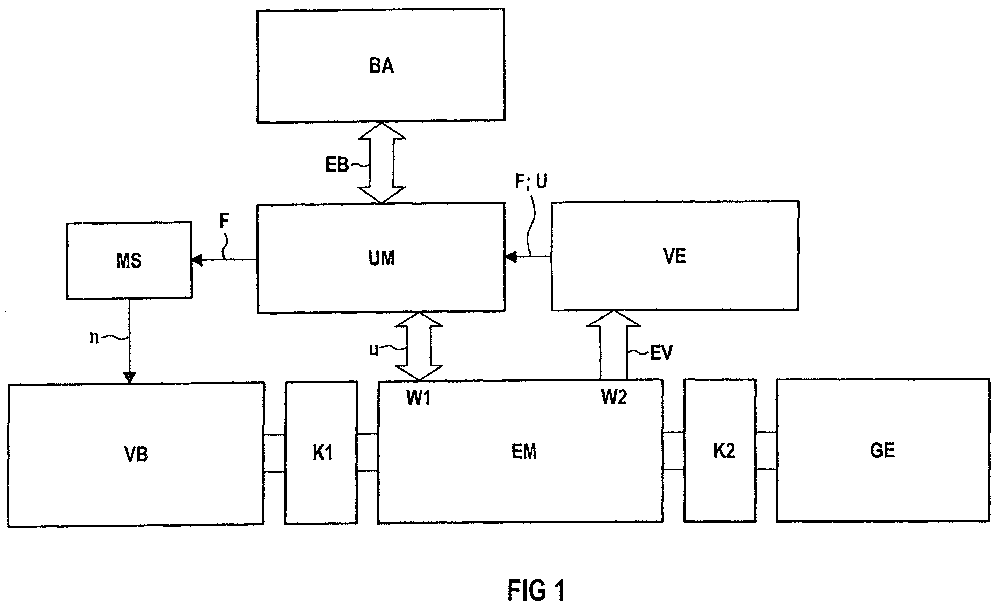

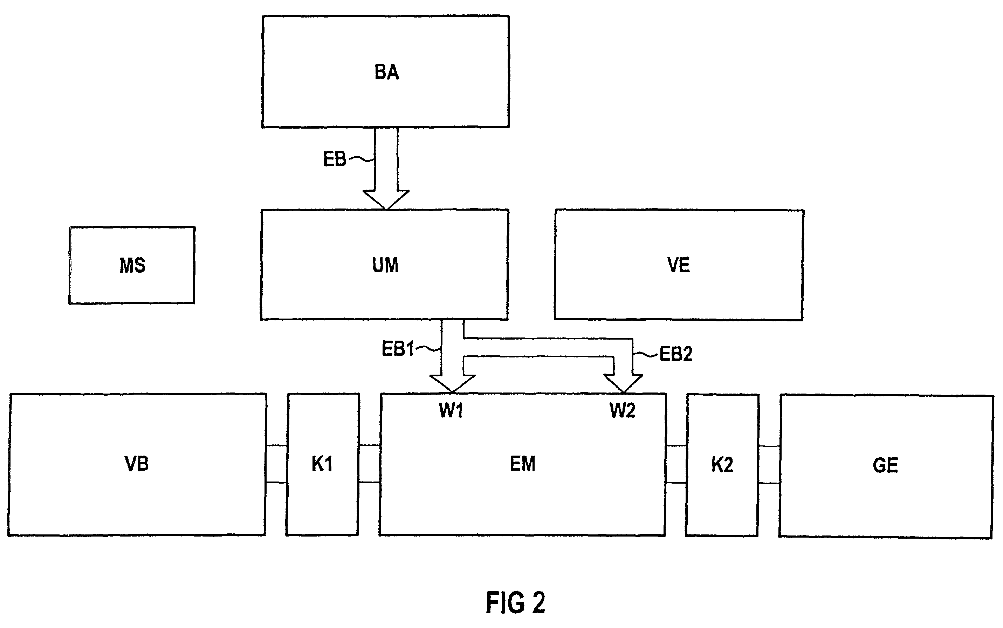

FIG 1,2 zeigen in einem Blockschaltbild ein Hybrid-Antriebssystem mit serieller Anordnung eines Verbrennungsmotors VB mit einer elektrischen Maschine EM in Form einer Asynchronmaschine und eines Getriebes GE mit jeweils zwischengeschalteter Kupplung K1 bzw.K2. Die elektrische Maschine EM weist erfindungsgemäß neben einer an sich üblichen ersten Statorwicklung W1 für einen elektrischen Traktionsantrieb eine zweite Statorwicklung W2 zur Versorgung von externen Netz-Verbrauchern VE eines Inselbetriebes auf. Für einen Traktionsbetrieb ist als elektrischer Energiespeicher üblicherweise eine Batterie BA vorgesehen, von der gemäß FIG 2 ein Gesamt-Energiefluss EB über eine Umrichter-Vorrichtung UM als geregelter und umgerichteter Energiefluss EB1 an die erste Statorwicklung W1 und Energiefluss EB2 an die erfindungsgemäß vorgesehene zweite Statorwicklung W2 geliefert wird, falls letztere - nach einer vorteilhaften Ausgestaltung der Erfindung - zum elektrischen Traktionsantrieb mitbenutzt ist.

Beim Generator-Inselbetrieb gemäß FIG 1 zur Versorgung von stationären Netzverbrauchern VE wird die an sich vorhandene Umrichter-Vorrichtung UM mitbenutzt, um bei von dem Verbrennungsmotor VB, vorzugsweise mit konstanter Drehzahl, angetriebener elektrischer Maschine EM eine zur Gewährleistung der für das externe Verbrauchernetz gewünschten Spannungshöhe und Spannungsstabilität entsprechende Magnetisierung der elektrischen Maschine EM zu liefern. Die Umrichter-Vorrichtung UM ist in gewohnter Weise mit ihrer Gleichspannungsseite an die Batterie BA und mit ihrer Wechselspannungsseite an die erste Statorwicklung W1 angeschlossen. Die aufgrund von Istwerten für Frequenz F und Spannung U der Netzverbraucher VE bestimmten Steuersignale werden als Drehzahlwert n von einer Motor-Steuervorrichtung MS an den Verbrennungsmotor VB und als Magnetisierungswert u an die erste Motorwicklung W1 und von dieser ohne gesonderte Schalt- bzw. Verbindungsmittel transformatorisch an die zweite Statorwicklung W2 weitergegeben, welche die Netzverbraucher mit einem Verbraucher-Energiefluß EV speist.

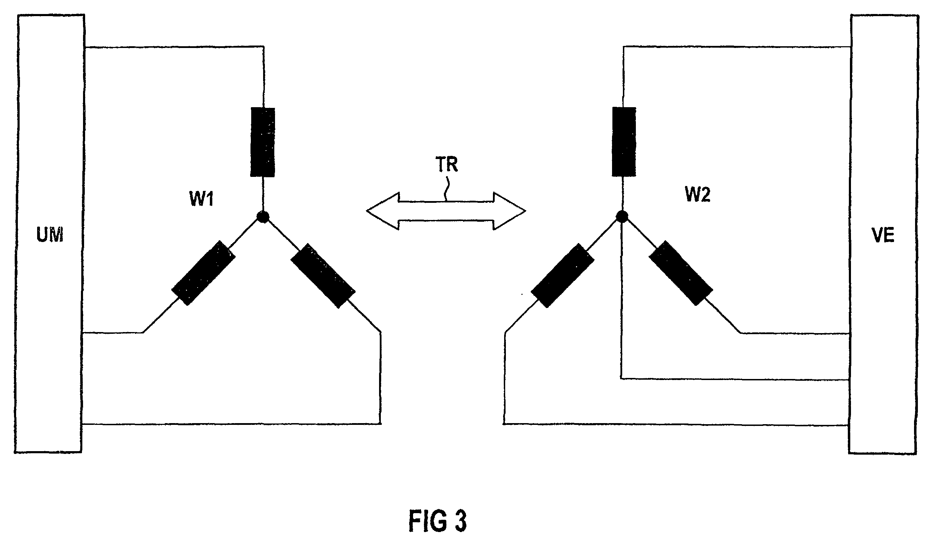

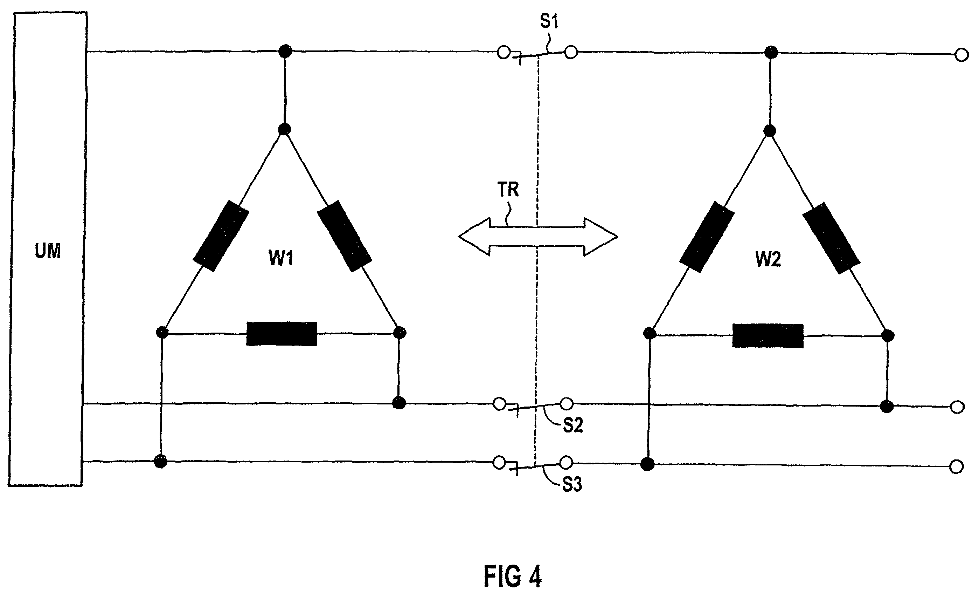

FIG 3,4 sollen die Wicklungsverschaltung der dreiphasigen ersten Statorwicklung W1 und der durch eine transformatorische Kopplung TR mitsteuerbaren zweiten Statorwicklung W2 jeweils beispielhaft in Sternschaltung im Generator-Inselbetrieb zur Versorgung der externen Netzverbraucher VE bzw. jeweils in Dreieckschaltung im Traktionsbetrieb verdeutlichen; gemäß FIG 4 ist entsprechend einer vorteilhaften Ausgestaltung der Erfindung die zweite Statorwicklung W2 über eine Schaltervorrichtung S1-S3 im Traktionsbetrieb zuschaltbar und somit für einen Traktionsbetrieb miteinsetzbar.

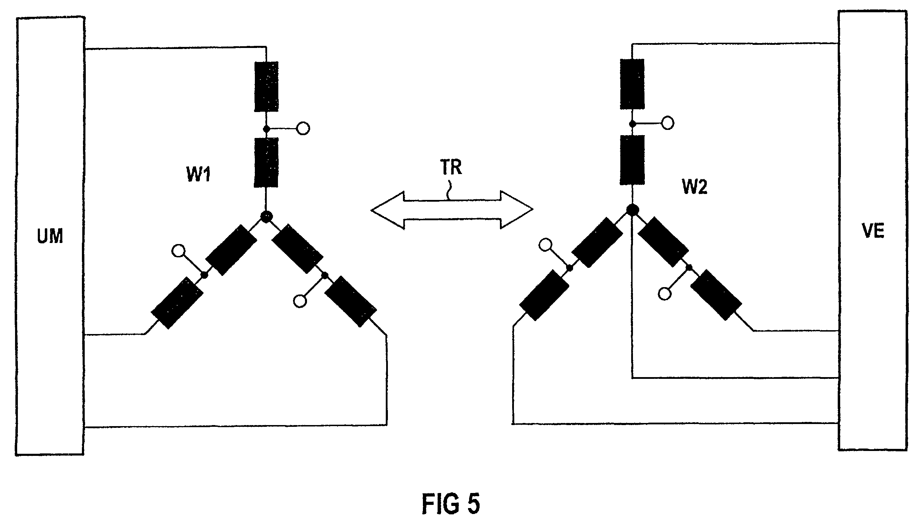

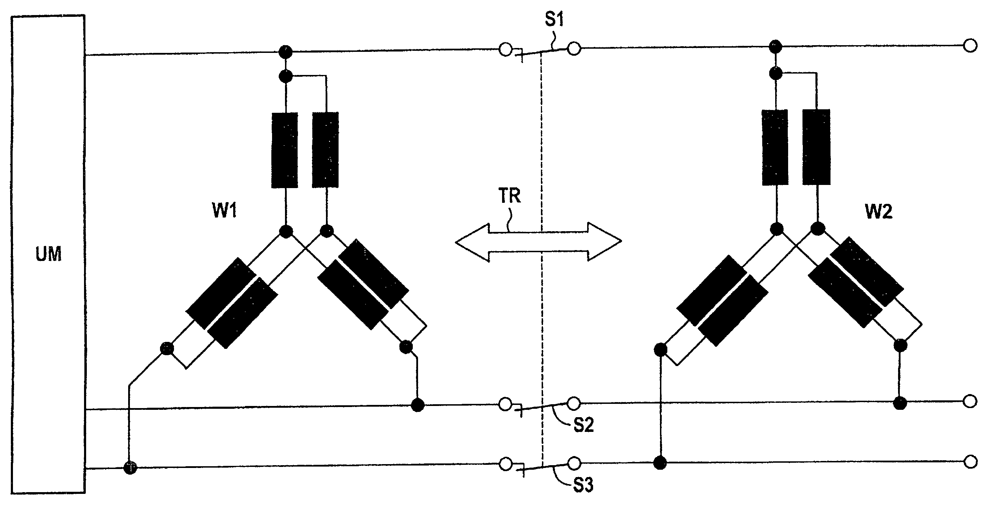

FIG 5,6 zeigen in Weiterführung der Beispiele nach FIG 3,4 jeweils die Statorwicklungen W1;W2 in Sternschaltung mit zusätzlicher Polumschaltung; nach Ausgestaltungen der Erfindung ist im Traktionsbetrieb im Sinne eines möglichst hohen Drehmoments die höhere Polzahl gemäß FIG 6 und im Generator-Inselbetrieb im Sinne eines verbrauchsgünstigen Drehzahlbereichs für den Verbrennungsmotor die niedrigere Drehzahl gemäß FIG 5 vorgesehen.

Die Erfindung lässt sich im wesentlichen wie folgt zusammenfassen:

Ein Motor-Generator-System eines Hybrid-Antriebes mit einem Verbrennungsmotor VB sowie einer elektrischen Maschine EM mit Anschluss an einen Energiespeicher BA über eine Umrichter-Vorrichtung UM kann mit geringem Zusatzaufwand zur Versorgung von externen Netzverbrauchern VE in einem Inselbetrieb mitbenutzt werden; dazu enthält die elektrische Maschine EM neben einer ersten Statorwicklung W1 für den Traktionsbetrieb eine zweite Statorwicklung W2 für einen Generator-Inselbetrieb; in vorteilhafter Weise ist die zweite Statorwicklung W2 transformatorisch an die erste Statorwicklung W1 gekoppelt und derart über die Umrichter-Vorrichtung UM aus dem Energiespeicher BA mit Magnetisierungsstrom versorgbar.

## Patentansprüche

1. Kraftfahrzeug mit Hybrid-Traktionsantrieb enthaltend einen Verbrennungsmotor (VB) und eine als Antriebsmotor bzw. als Generator betreibbare elektrische Maschine (EM), insbesondere in Form einer Asynchronmaschine mit Kurzschlusswicklung,
- mit neben einer ersten, dem Traktionsantrieb zugeordneten Statorwicklung (W1) einer zweiten, einem stationären Generator-Inselbetrieb der von dem Verbrennungsmotor (VB) angetriebenen elektrischen Maschine (EM) zugeordneten Statorwicklung (W2) zur Versorgung von externen Netzverbrauchern (VE) außerhalb des Kraftfahrzeuges.

2. Kraftfahrzeug nach Anspruch 1
- mit einer Auslegung der zweiten Statorwicklung (W2) in Anpassung an die Erfordernisse, insbesondere hinsichtlich Spannungshöhe bzw. Leistungsanforderung, der externen Netzverbraucher (VE).

3. Kraftfahrzeug nach Anspruch 1 und/oder 2
- mit einer zum Betrieb der elektrischen Maschine (EM) im Traktionsbetrieb über die erste Statorwicklung (W1) zwischen dieser und einem Gleichspannungsbordnetz mit Energiespeicher, insbesondere Batterie (BA), vorgesehenen Umrichter-Vorrichtung (UM);
- mit einer Mitbenutzung der Umrichter-Vorrichtung (UM) zur Spannungs- und/oder Drehzahlregelung bei Betrieb der elektrischen Maschine (EM) im stationären Generator-Inselbetrieb.

4. Kraftfahrzeug nach Anspruch 2 und/oder 3
- mit einer transformatorischen Ankopplung der zweiten Statorwicklung (W2) an die erste Statorwicklung (W1).

5. Kraftfahrzeug nach Anspruch 4
- mit einer Anordnung der ersten Statorwicklung (W1) und der zweiten Statorwicklung (W2) in einem gemeinsamen Blechpaket, insbesondere in gemeinsamen Nuten der elektrischen Maschine (EM).

6. Kraftfarzeug nach zumindest einem der Ansprüche 1-5
- mit einer Ausbildung der ersten Statorwicklung (W1) und/oder der zweiten Statorwicklung (W2) als Dreiphasenwicklung in umschaltbarer Stern-Dreieck-Schaltung.

7. Kraftfahrzeug nach zumindest einem der Ansprüche 1-6
- mit einer Ausbildung der ersten Statorwicklung (W1) und/oder der zweiten Statorwicklung (W2) als polumschaltbare Wicklung.

8. Kraftfahrzeug nach Anspruch 7
- mit einer höheren Polzahl der ersten Statorwicklung (W1) und/oder der zweiten Statorwicklung (W2) im Traktionsbetrieb der elektrischen Maschine (EM);
- mit einer niedrigeren Polzahl der ersten Statorwicklung (W1) und/oder der zweiten Statorwicklung (W2) im Generatorbetrieb der elektrischen Maschine (EM).

9. Kraftfahrzeug nach zumindest einem der Ansprüche 1-8
- mit einer Mitbenutzung der zweiten Statorwicklung (W2) im Traktionsbetrieb der elektrischen Maschine.

## Claims

1. Motor vehicle having a hybrid traction drive containing an internal combustion engine (VB) and an electric machine (EM) that can be operated as a drive motor or as a generator, in particular in the form of an asynchronous machine with a squirrel-cage winding,
- having in addition to a first stator winding (W1) that is associated with the traction drive a second stator winding (W2) that is associated with a stationary isolated generator operation of the electric machine (EM), driven by the internal combustion engine (VB), for supplying external power consumers (VE) outside the motor vehicle.

2. Motor vehicle according to claim 1
- having a configuration of the second stator winding (W2) that is matched to the requirements, in particular with regard to a voltage level or power demand, of the external power consumers (VE) .

3. Motor vehicle according to claim 1 and/or 2
- having a converter device (UM) that is provided for the operation of the electric machine (EM) in the traction operation by way of the first stator winding (W1) between the latter and a vehicle d.c. electrical system that has an energy store, in particular a battery (BA);
- having joint use of the converter device (UM) for voltage control and/or speed control during operation of the electric machine (EM) in the stationary isolated generator operation.

4. Motor vehicle according to claim 2 and/or 3
- having a transformer coupling coupling the second stator winding (W2) to the first stator winding (W1) .

5. Motor vehicle according to claim 4
- having an arrangement of the first stator winding (W1) and of the second stator winding (W2) in a common laminated core, in particular in common slots of the electric machine (EM).

6. Motor vehicle according to at least one of claims 1-5
- having a configuration of the first stator winding (W1) and/or of the second stator winding (W2) as a three-phase winding in a switch-selectable star-delta connection.

7. Motor vehicle according to at least one of claims 1-6
- having a configuration of the first stator winding (W1) and/or of the second stator winding (W2) as a pole-changeable winding.

8. Motor vehicle according to claim 7
- having a higher pole number of the first stator winding (W1) and/or of the second stator winding (W2) in the traction operation of the electric machine (EM);
- having a lower pole number of the first stator winding (W1) and/or of the second stator winding (W2) in the generator operation of the electric machine (EM).

9. Motor vehicle according to at least one of claims 1-8
- having joint use of the second stator winding (W2) in the traction operation of the electric machine.

## Revendications

1. Véhicule à moteur ayant un entraînement de traction hybride, emportant un moteur à combustion interne (VB) et une machine électrique (EM) susceptible de fonctionner en tant que moteur d'entraînement ou en tant que générateur, en particulier sous forme d'une machine asynchrone ayant un enroulement de court-circuit,
- ayant, outre un premier enroulement de stator (W1) associé à l'entraînement de traction, un deuxième enroulement de stator (W2), associé à un fonctionnement isolé en générateur de la machine électrique (EM) entraînée par le moteur à combustion interne (VB) et destiné à alimenter des consommateurs de réseau (VE) à l'extérieur du véhicule automobile.

2. Véhicule à moteur selon la revendication 1
- ayant une conception du deuxième enroulement de stator (W2) pour s'adapter aux exigences des consommateurs de réseau (VE) externes, en particulier pour ce qui est du niveau de tension ou des besoins en puissance.

3. Véhicule à moteur selon la revendication 1 et/ou 2
- ayant un dispositif de mutateur (UM) prévu pour le fonctionnement de la machine électrique (EM) en fonctionnement en traction au moyen du premier enroulement de stator (W1) entre celui-ci et un réseau de bord de tension continue avec un stockage d'énergie, en particulier une batterie (BA) ;
- ayant une utilisation simultanée du dispositif de mutateur (UM) pour le réglage de la tension et/ou du régime pour le fonctionnement de la machine électrique (EM) dans le fonctionnement isolé stationnaire en générateur.

4. Véhicule à moteur selon la revendication 2 et/ou 3
- ayant un accouplement par transformateur du deuxième enroulement de stator (W2) sur le premier enroulement de stator (W1 ).

5. Véhicule à moteur selon la revendication 4
- ayant une disposition du premier enroulement de stator (W1) et du deuxième enroulement de stator (W2) dans un même paquet de tôles, en particulier dans des encoches communes de la machine électrique (EM).

6. Véhicule à moteur selon au moins l'une des revendications 1 à 5
- ayant une configuration du premier enroulement de stator (W1 ) et/ou du deuxième enroulement de stator (W2) en tant qu'enroulement triphasé dans un montage commutable triangulaire en étoile.

7. Véhicule à moteur selon au moins l'une des revendications 1 à 6
- ayant une configuration du premier enroulement de stator (W1) et/ou du deuxième enroulement de stator (W2) en tant qu'enroulement à commutation de polarité.

8. Véhicule à moteur selon la revendication 7
- ayant un nombre de pôles plus grand du premier enroulement de stator (W1) et/ou du deuxième enroulement de stator (W2) dans le fonctionnement en traction de la machine électrique (EM) ;
- avec un nombre de pôles plus petit du premier enroulement de stator (W1) et/ou du deuxième enroulement de stator (W2) dans le fonctionnement en générateur de la machine électrique (EM).

9. Véhicule à moteur selon la revendication 1
- ayant une utilisation simultanée du deuxième enroulement de stator (W2) dans le fonctionnement de traction de la machine électrique (EM).
